Europäisches Patentamt

European Patent Office

Office européen des brevets

(19)

(11) Veröffentlichungsnummer: **0 424 661 B1**

(12) # EUROPÄISCHE PATENTSCHRIFT

(45) Veröffentlichungstag der Patentschrift: **15.03.95**

(51) Int. Cl.⁶: **C03C 8/24**, H01M 2/08

(21) Anmeldenummer: **90117804.6**

(22) Anmeldetag: **15.09.90**

(54) **Einschmelzglas zur Herstellung von Glas-Metall-Dichtungen.**

(30) Priorität: **23.10.89 DE 3935227**

(43) Veröffentlichungstag der Anmeldung:
**02.05.91 Patentblatt 91/18**

(45) Bekanntmachung des Hinweises auf die
Patenterteilung:
**15.03.95 Patentblatt 95/11**

(84) Benannte Vertragsstaaten:
**DE FR GB IT NL**

(56) Entgegenhaltungen:
**EP-A- 0 262 073**
**FR-A- 2 439 753**
**US-A- 2 352 425**
**US-A- 4 446 241**

**CHEMICAL ABSTRACTS, vol. 90, no. 24, 11
Juni 1979 Columbus, Ohio, USA Seite 290,
ref. no. 191467Y & JP-A-53136020.**

**NTIS TECH NOTES, PB83-925307, Juli 1983,
Springfield, VS, US Department ofEnergy,
NTN 83-0458 :"Glass for Sealing Lithium-
Cells"**

(73) Patentinhaber: **Schott Glaswerke
Hattenbergstrasse 10
D-55122 Mainz (DE)**

(84) Benannte Vertragsstaaten:
**DE FR IT NL**

(73) Patentinhaber: **CARL-ZEISS-STIFTUNG
Schott Glaswerke
Hattenbergstrasse 10
D-55122 Mainz (DE)**

(84) Benannte Vertragsstaaten:
**GB**

(72) Erfinder: **Brix, Peter, Dr.
Sertoriusring 307
D-6500 Mainz (DE)**
Erfinder: **Gaschler, Ludwig
Westring 299
D-6500 Mainz (DE)**

Rank Xerox (UK) Business Services
(3.10/3.09/3.3.3)

CHEMICAL ABSTRACTS, vol. 108, no. 24, 13 Juni 1988 Columbus, Ohio, USA B.SAMUNEVA ET AL.: "Synthesis and Study of Lithium-Resistant Glasses." Seite 273;ref. no. 208855P & Khim.Ind.(Sofia) 59(3), 114-118, 1987.

**Beschreibung**

Gegenstand der Erfindung ist ein Einschmelzglas zur Herstellung von Glas-Metall-Dichtungen, insbesondere für Poldurchführungen in galvanischen Elementen mit einer Lithiumelektrode.

In galvanischen Elementen mit einer Lithiumelektrode erfolgt die hermetische Abdichtung der Zelle nach außen sowie die elektrische Isolation der Poldurchführung durch einen Glas-Isolator im Zellenkopf, der mit dem Gehäuse und dem nach außen durchgeführten elektrischen Leiter, der im allgemeinen die Kathode kontaktiert, verschmolzen ist.

Die Lebensdauer und Lagerfähigkeit der Zelle hängt ganz wesentlich von der Standfestigkeit dieses Glasisolators, d.h. von der Standfestigkeit des Einschmelzglases, ab, da durch den aggressiven Zelleninhalt das Glas einem besonders starken korrosiven Angriff ausgesetzt ist. Ferner ist eine ausreichende dilathermische Anpassung des thermischen Ausdehungsverhaltens des Glases an das der anzuschmelzenden Metalle für eine lange Lebensdauer der Abdichtung wesentlich. Die Korrosion kann verursacht werden durch Lithium, durch den Depolarisator (den Kathodenwerkstoff), wobei als Depolarisatoren u.a. verwendet werden: $SO_2$, $SOCl_2$, $POCl_3$, $SeOCl_2$, $SO_3$, $VOCl_3$, $CrO_x$, $Cl_2$, $SO_2Cl_2$, $NO_2Cl$, $NOCl$, $NO_2$, $S_2Cl_2$, $S_2Br_2$ und Mischungen davon sowie feste Depolarisatoren wie HgO, $HgCrO_4$, Braunstein und im allgemeinen Metallhalogenide, Oxide, Chromate, Bichromate, Permanganate, Periodate, Molybdate, Vanadate, Chalcogenide und Mischungen davon. Die zur Zeit am häufigsten benutzten Depolarisatoren sind $SOCl_2$, $SO_2$ und $CrO_x$. Korrosiv wirken können auch die verwendeten Elektrolyten mit den darin gelösten Leitsalzen. Als Elektrolyt bekannt sind u.a. Tetrahydrofuran, Propylencarbonat, Dimethylsulfat, Dimethylsulfoxid, Gamma-Buryrolacton, Dimethylcarbonat, Methylformiat, Burylformiat, Dimethoxiethan (DME), Acetonitril, N-Nitrosodimethylamin und Dimethylformamid. Als Leitsalze Verwendung finden Leichtmetallsalze, insbesondere Lithiumsalze wie Halogenide, Perchlorate, Tetrachloroaluminate, Fluoroborate, Hexafluorophosphate, Hexafluoroarsenate und Clovoboranate. Die derzeit am häufigsten kommerziell verwendeten Elektrolyt-Leitsalz-Kombinationen sind Lithiumtetrachloroaluminat in Thionylchlorid oder Dimethoxiethan bzw. Propylencarbonat.

Die für das Zellengehäuse bzw. für die Stromableiter geeigneten Metalle werden durch die Zellenkomponenten bestimmt, mit denen sie in Kontakt kommen. Mit Lithium verträglich sind z.B. Kupfer, Eisen, Stahl und alle Eisenlegierungen, Nickel und Nickellegierungen wie Kovar, Inconel oder Monel (Warenzeichen) und insbesondere auch Eisen-Nickel-Legierungen, Titan, Wolfram, Molybdän, Vanadium, Niob, Tantal usw. Mit $SO_2$, $SOCl_2$ und $SO_2Cl_2$ verträglich sind z.B. Titan, Tantal, Vanadium, Wolfram, Niob, Molybdän und Nickellegierungen wie Kovar, Inconel, Monel usw.; gegenüber Silberchromat beständig sind z.B. Titan, Molybdän, Vanadium Tantal, Wolfram, Chrom und rostfreier Stahl.

Die zur Zeit am weitesten verbreiteten Lithiumzellen besitzen Gehäuse und Deckel aus vernickeltem Stahl oder Edelstahl sowie Stromableiter aus Edelstahl oder aus Einschmelzlegierungen auf Ni-Fe-Basis.

Da bekanntermaßen die Lebensdauer der Zelle wesentlich von der Standfestigkeit des Einschmelzglases des Glasisolators abhängt, hat es nicht an Versuchen gefehlt, diese Standfestigkeit zu verbessern.
Aus DE-PS 29 04 396 ist bekannt, die Lebensdauer eines aus einem herkömmlichen Silicat- oder Borsilicat-Einschmelzglas bestehenden Isolators dadurch zu verbessern, daß die dem Zelleninnern ausgesetzte Gasoberfläche mit einer Schutzschicht überzogen wird. Eine derartige Maßnahme ist aufwendig und es besteht immer die Gefahr, daß der Überzug undicht wird. Es ist daher auch schon versucht worden, das Glaslot an sich zu verbessern und es sind bereits zahlreiche Gläser auf ihre Eignung als Einschmelzgläser in Lithiumzellen untersucht worden. In dem Sandia Report SAND 83-2314, S. 7-20 werden Silikat-, Alumoborat-, Phosphat-, Calciumaluminat- und Alkaliboratgläser beschrieben. Die Silikatgläser besitzen einen $SiO_2$-Gehalt von über 40 Gew.-%; sie sind korrosionsanfällig in Bezug auf die Zelleninhaltsstoffe und sind aufgrund der Fehlanpassung des thermischen Ausdehnungskoeffizienten gegenüber Ni/Fe-Legierungen für den praktischen Einsatz nicht geeignet.

Die Alumoboratgläser besitzen eine geringe Kristallisationsfestigkeit, eine ungenügende Korrosionsfestigkeit sowie eine fehlende thermische Anpassung für Ni/Fe-Legierungen. Die durch den hohen Lanthan-Anteil verursachten hohen Gemengekosten machen sie noch darüber hinaus ungeeignet für den praktischen Einsatz für Glasdurchführungen in elektrischen Zellen.

Die Phosphatgläser sind zwar gegenüber den Zelleninhaltsstoffen weitgehend inert, sie sind jedoch sehr kristallisationsempfindlich. Auch diese Legierungen zeigen gegenüber Ni/Fe-Legierungen eine thermische Fehlanpassung.

Die Calciumaluminatgläser, die im wesentlichen aus CaO (bis 45 Gew.-%) bestehen, sind zwar gegenüber den Batterieinhaltsstoffen sehr beständig, sind in der Praxis jedoch wegen ihrer großen Kristallisationsneigung und der ungenügenden Hydrolysebeständigkeit nicht brauchbar. Diese Gläser lösen sich bereits im Beständigkeitstest nach ISO 719 auf.

Die Lithiumboratgläser sind zwar gegenüber den Zelleninhaltsstoffen weitgehend inert, besitzen jedoch nur Modellcharakter, da wegen ihrer äußerst großen Kristallisationsneigung an eine praktische Anwendung nicht zu denken ist.

Aus DE-OS 29 42 538 ist ferner ein natriumbeständiges Dichtungsglas bekannt, das sich durch einen hohen $B_2O_3$- und einen niedrigen $SiO_2$-Anteil auszeichnet und in CA 104, 114783d/SU-PS 1189824 wird ein Cd-dampfbeständiges lithiumfreies Glas mit hohem Erdalkaligehalt beschreiben. Eine Eignung für Lithiumzellen ist nicht erwähnt.

In J. Mater. Res., Vol 2, No. 2, S. 182 (1987) werden ebenfalls eine Reihe unterschiedlichen Gläsern auf ihre Eignung als korrosionsfestes Einschmelzglas für Poldurchführungen in Lithiumzellen untersucht. Die Autoren kommen nach der Untersuchung zahlreicher Gläser zu dem Schluß, daß die Glaskorrosion durch die Verwendung silikatfreier Gläser wie Alumoborat- oder Boratgläser ausgeschaltet werden kann. Ein in der Praxis brauchbares derartiges Glas besteht jedoch nicht.

Es stellt sich daher die Aufgabe, ein Einschmelzglas für Zellen mit agagressiven Zellinhaltsstoffen, insbesondere Lithiumzellen, zu finden, das sowohl eine gute Beständigkeit gegenüber den Zellinhaltsstoffen und der Atmosphäre besitzt, als auch in seinem thermischen Ausdehnungsverhalten in ausreichendem Maße an die für das Zellengehäuse sowie die zur Stromableitung verwandten Metalle, insbesondere Ni/Fe-Legierungen, angepaßt ist. Das Glas muß ferner eine ausreichende hydrolytische Beständigkeit besitzen, da die galvanischen Zellen im Verlauf ihres Herstellungsprozesses gewaschen werden und die Glas-Metall-Dichtung dies ohne Qualitätsverlust überstehen muß.

Diese Aufgabe wird durch das in dem Patentanspruch 1 beschriebene Einschmelzglas beschrieben.

Überraschenderweise zeigt sich, daß trotz des relativ hohen $SiO_2$-Gehaltes die Metall-Glas-Durchführungen zu keiner Beschränkung der Lebensdauer der Zelle führen. Der $SiO_2$-Gehalt soll 25 Gew.-% nicht übersteigen, da das zu einer Verschlechterung der Korrosionsfestigkeit führt. Sinkt der $SiO_2$-Gehalt unter 16 %, so nimmt sowohl die hydrolytische Beständigkeit des Glases als auch die mechanische Stabilität der resultierenden Anschmelzung ab. Bevorzugt sollte der $SiO_2$-Gehalt im Bereich von 19 - 25 Gew.-% $SiO_2$ liegen.

Der Gehalt an $B_2O_3$ soll zwischen 20 und 35 Gew.-% liegen. Die Borsäure bewirkt eine Erhöhung des elektrischen Volumenwiderstandes und eine Erniedrigung des thermischen Ausdehnungskoeffizienten. Sinkt der Borsäuregehalt unter 20 Gew.-%, so verschlechtert sich der elektrische Volumenwiderstand; steigt der Gehalt über 35 Gew.-%,so wird die Hydrolyse- und die Kristallisations-Beständigkeit herabgesetzt. Besonders günstige Ergebnisse erhält man mit einem $B_2O_3$-Gehalt zwischen 20 und 29 Gew.-%.

Der Glaswerkbildner $Al_2O_3$ erhöht wie $SiO_2$ die mechanische Festigkeit des Glases und erniedrigt den thermischen Ausdehnungskoeffizienten. $Al_2O_3$ ist in Mengen von 15 -24 Gew.-% in dem Glas vorhanden. Überschreitet man die Obergrenze dieses Bereichs, so erhöht sich die Viskosität des Glases bei einer bestimmten Einschmelztemperatur, was dazu führt, daß man für haltbare Verschmelzungen entweder unerwünscht hohe Einschmelztemperaturen oder unerwünscht lange Einschmelzzeiten in Kauf nehmen muß. Darüberhinaus steigt auch die Neigung zur Entglasung und es sinkt die hydrolytische Beständigkeit. Unterschreitet man die Grenze von 14 Gew.-% für den $Al_2O_3$-Gehalt, so besteht die Gefahr einer Entmischung des Glases sowie einer Fehlanpassung des thermischen Ausdehnungskoeffizienten an den Innenableiter. Bevorzugt wird ein Bereich für den $Al_2O_3$-Gehalt von 17 - 22 Gew.-%.

Die Alkalien $Li_2O$, $Na_2O$ und $K_2O$ dienen als Flußmittel zur Verbesserung der Schmelzbarkeit und gleichzeitig zur Erhöhung des thermischen Ausdehnungskoeffizienten. Mit $Li_2O$, das in Mengen von 0 - 8, vorzugsweise in Mengen von 1 - 7 Gew.-% in dem Glas vorhanden sein kann, erzielt man die geringste Viskosität für einen gegebenen Ausdehnungskoeffizienten; der Rohstoff ist aber verhältnismäßig teuer. Mit $K_2O$, das in Mengen von 0 -10 Gew.-% in dem Glas vorhanden sein kann, wird sowohl die Verarbeitungs- als auch die Erweichungstemperatur der Gläser gesenkt und der elektrische Widerstand erhöht. $Na_2O$ ist das billigste der Alkalioxide und soll in Mengen von nicht mehr als 5 Gew.-%, vorzugsweise nicht mehr als 4 Gew.-% in dem Glas vorhanden sein. $Na_2O$ wirkt auf den elektrischen Widerstand des Glases erniedrigend. Rubidium- und Cäsiumoxid kommen im allgemeinen wegen ihres hohen Preises als Glasbestandteile nicht in Frage. Sie können jedoch einen Teil des Kaliums ersetzen, ohne daß das zu einer wesentlichen Veränderung der Glaseigenschaften führt. Die Summe der Alkalioxide soll zwischen 4 und 15 Gew.-% liegen. Ein Wert von 15 Gew.-% soll nicht überschritten werden, da sonst die hydrolytische Beständigkeit stark zurückgeht. Bei einem Wert unter 4 Gew.-% ist die dilathermische Anpassung des Glases an das Metall so unbefriedigend, daß eine auch bei Temperaturwechselbeanspruchungen langzeitig dichte Verschmelzung zwischen Glas und Metall nicht mehr sicher erreicht werden kann. Als besonders geeignet hat sich ein Gesamtalkalioxidgehalt von 6 -14 Gew.-% erwiesen.

Die Erdalkalien, insbesondere CaO, BaO und SrO erhöhen ebenfalls die thermische Ausdehnung, jedoch nicht in einem so starken Ausmaß wie die Alkalien. Sie besitzen einen positiven Einfluß auf die hydrolytische Beständigkeit, die Festigkeit und den elektrischen Volumenwiderstand im Vergleich zu den Alkalien, jedoch ist diesen gegenüber die schmelzerleichternde Wirkung nicht so stark ausgeprägt. Magnesiumoxid kann bis zu einem Anteil von 4 Gew.-% im Glas vorliegen, ein höherer Gehalt kann die Kristallisationsfestigkeit des Glases beeinträchtigen. Vorzugsweise sollen 2 Gew.-% MgO nicht überschritten werden. Der Gehalt von CaO soll zwischen 5 und 12 Gew.-% liegen. Ein Gehalt von CaO unter 5 Gew.-% hat einen negativen Einfluß auf den thermischen Ausdehnungskoeffizienten und erhöht die Entmischungsneigung, ein Wert von über 12 Gew.-% kann die Kristallisationsfestigkeit des Glases verringern. Bevorzugt wird ein Calziumoxid-Gehalt zwischen 5 und 10 Gew.-% angewendet. Bariumoxid und Strontiumoxid können zusammen in einer Menge von zusammen zwischen 10 und 30 Gew.-% in dem Glas vorhanden sein. Oberhalb von 30 Gew.-% kann eine verstärkte Neigung zur Entglasung auftreten. Die Kristallisationsneigung von Strontiumoxid ist geringfügig größer als die von Bariumoxid, kann aber durch eine Anpassung des Alkaligehaltes innerhalb der beanspruchten Grenzen beherrscht werden. Bevorzugt kommen BaO und/oder SrO in Mengen von insgesamt 12 - 21 Gew.-% zur Anwendung. Zinkoxid kann in Mengen von 0 - 5 Gew.-% in dem Einschmelzglas vorliegen. ZnO übt im Vergleich zu den übrigen, Erdalkalien eine positive Wirkung auf die hydrolytische Beständigkeit aus. Ein Gehalt von 5 Gew.- % soll jedoch nicht überschritten werden, weil sonst eine zu starke Kristallisationsneigung und verschmelzmäßige Fehlanpassung der Glas-Metall-Durchführung zu befürchten ist. Bevorzugt wird ein Zinkoxidgehalt von 0 - 5 Gew.-%. Die Summe der Erdalkalioxide + Zinkoxid soll zwischen 15 und 40 Gew.-% liegen. Liegt die Summe der 2-wertigen Oxide unter 15 Gew.-%, kann keine dichte Glas-Metall-Verschmelzung erzielt werden; bei Überschreiten eines Gehaltes von 40 Gew.-% für die 2-wertigen Oxide zeigen die resultierenden Gläser eine starke Neigung zur Entglasung. Bevorzugt werden Gehalte an Erdalkali- und Zinkoxid von 20 - 30 Gew.-%.

Läutermittel wie $Sb_2O_3$, $As_2O_3$ oder Cer (IV)-Verbindungen können in den üblichen Konzentrationen von etwa 0 - 1 Gew.-% dem Glas zugesetzt werden, ohne dessen Eigenschaften negativ zu beeinflussen. Sie sind jedoch für die Herstellung der beschriebenen Einschmelzgläser nicht unbedingt notwendig.

Die gefundenen Gläser besitzen eine gute dilathermische Anpassung an die zu verschmelzenden Metalle, sind korrosionsfest und besitzen eine ausreichende hydrolytische Beständigkeit. Die Gläser ermöglichen ferner die Herstellung von Glas-Metalldichtungen mit ausgezeichneter Verschweißfestigkeit. Diese Verschweißfestigkeit ist wichtig, da üblicherweise der bereits mit der Glas-Metalldichtung versehene Zellendeckel auf das Zellengehäuse aufgeschweißt wird. Auch nach dieser thermischen Belastung der Glas-Metalldichtung muß die Dichtung ihre Funktion erfüllen.

Beispiele:

Die Gläser wurden in einem 1-Liter-fassenden Platintiegel mit Hochfrequenzbeheizung bei 1.400 °C aus üblichen Gemengebestandteilen während 2,5 h erschmolzen, anschließend mittels eines Platinrührers 30 Minuten bei 1.200 °C gerührt und nach weiterem 45-minütigen Abstehen bei 1.350 °C in eine Stahlform gegossen und in einem Kühlofen ab 520 °C mit einer Kühlgeschwindigkeit von 20 °C/Stunde auf Zimmertemperatur abgekühlt. Die Zusammensetzungen der Gläser (Synthesewerte in Gew.-% auf Oxidbasis) sind in der Tabelle zusammengefaßt. Von den gekühlten Gußstücken wurden vorrangig die hydrolytische Beständigkeit (H) nach DIN 12111 und die thermische Dehnung (α) im Bereich von 20 - 300 °C bestimmt. Bei fast allen Gläsern wurde weiterhin die Glastransformationstemperatur (Tg) bestimmt, zusätzlich in einigen Fällen die Verarbeitungstemperatur ($V_A$, entspricht einer Viskosität von $10^4$ dPa•s) und die Dichte in Gramm pro $cm^3$. Die physikalischen Werte sind in der Tabelle 2 zusammengefaßt.

Für die Beispiele Nr. 7 und Nr. 10 wurde zusätzlich der TK 100-Wert bestimmt, d.h. die Temperatur, bei der die spezifische elektrische Leitfähigkeit 100 • $10^{-10}$ S • $cm^{-1}$ beträgt. Dieser Wert betrug für Beispiel Nr.7 391 und für Beispiel Nr. 10 367.

Die Korrosionsfestigkeit der Gläser gegenüber den Batterieinhaltsstoffen wurde wie folgt bestimmt: Lithium/Thionylchloridzellen mit 14,7 mm Durchmesser und 25 mm Länge wurden 8 Tage bei 150 °C auf dem Kopf stehend gelagert, so daß der Elektrolyt sich in Kontakt mit dem Einschmelzglas befand. Nach Ablauf der 8 Tage wurde die Zelle geöffnet und die der Zelleninnenseite zugewandte Glasseite auf Korrosion hin untersucht. Aus dem Streckenverhältnis Korrosionsfront zu Glasdurchmesser wurde die Lebensdauer unter den Testbedingungen ermittelt. Die geschätzte Lebensdauer lag in allen Fällen über 6 Wochen, so daß im praktischen Betrieb mit einer Lebensdauer von mindestens 10 Jahren gerechnet werden kann.

# EP 0 424 661 B1

Tabelle 1:

| Beispiel Nr. | $SiO_2$ | $B_2O_3$ | $Al_2O_3$ | $Li_2O$ | $Na_2O$ | $K_2O$ | MgO | CaO | BaO | ZnO |
|---|---|---|---|---|---|---|---|---|---|---|
| 01 | 21,2 | 24,8 | 19,2 | 3,0 | 2,0 | 2,5 | - | 7,3 | 20,0 | - |
| 02 | 19,7 | 28,3 | 19,2 | 2,0 | 2,0 | 6,5 | - | 7,3 | 15,0 | - |
| 03 | 21,7 | 27,3 | 19,2 | 2,0 | 3,0 | 6,5 | - | 7,3 | 13,0 | - |
| 04 | 20,7 | 27,3 | 19,2 | 2,0 | 3,0 | 7,5 | - | 7,3 | 13,0 | - |
| 05 | 19,7 | 27,3 | 19,2 | 2,0 | 2,0 | 7,5 | - | 7,3 | 15,0 | - |
| 06 | 20,7 | 27,3 | 17,2 | 2,0 | 2,0 | 8,5 | - | 7,3 | 15,0 | - |
| 07 | 19,7 | 26,3 | 18,2 | 2,0 | 2,0 | 8,5 | - | 7,3 | 16,0 | - |
| 08 | 21,85 | 22,5 | 20,5 | 2,0 | 2,3 | 8,25 | - | 7,3 | 15,3 | - |
| 09 | 24,5 | 22,0 | 18,6 | 2,0 | 4,0 | 5,0 | - | 7,3 | 16,6 | - |
| 10 | 23,2 | 20,0 | 21,2 | 2,0 | 2,3 | 9,3 | - | 5,0 | 17,0 | - |
| 11 | 25,0 | 20,6 | 18,35 | 2,5 | 2,4 | 7,4 | 1,0 | 5,25 | 17,5 | - |
| 12 | 22,9 | 20,0 | 21,1 | 7,0 | - | - | - | 9,6 | 19,4 | - |
| 13 | 22,0 | 23,7 | 18,95 | 6,8 | - | - | 1,1 | 9,5 | 17,95 | - |
| 14 | 21,4 | 23,3 | 19,75 | 2,5 | 2,0 | 4,3 | - | 5,65 | 16,1 | 5,0 |

Tabelle 2

| Beispiel Nr. | $\alpha$ ($10^{-6} \cdot K^{-1}$) | $T_g$ (°C) | $V_A$ (°C) | Dichte (g $\cdot$ cm$^{-3}$) | H ($\mu$g $Na_2O \cdot g^{-1}$) |
|---|---|---|---|---|---|
| 01 | 8,10 | | | | 552 |
| 02 | 8,23 | 493 | | | 1.042 |
| 03 | 8,50 | | | | 738 |
| 04 | 8,76 | 485 | | | 936 |
| 05 | 8,57 | 481 | | | 1.066 |
| 06 | 8,94 | 487 | | | 1.388 |
| 07 | 8,97 | 487 | 749 | 2.747 | 1.460 |
| 08 | 8,82 | 483 | 770 | 2.736 | 453 |
| 09 | 8,74 | 492 | | 2.781 | 381 |
| 10 | 9,36 | 486 | 752 | 2.793 | 676 |
| 11 | 9,01 | 480 | 775 | 2.781 | 341 |
| 12 | 8,72 | 466 | | | 412 |
| 13 | 8,55 | 474 | | | 512 |
| 14 | 8,00 | 484 | | | 121 |

**Patentansprüche**

1. Einschmelzglas zur Herstellung von Glas-Metall-Dichtungen, insbesondere für Poldurchführungen in galvanischen Elementen mit einer Lithium-Elektrode, mit einem thermischen Ausdehnungskoeffizienten $\alpha_{20/300}$ von 8 - 9,5 $\cdot$ 10$^{-6}$ K$^{-1}$, einer Transformationstemperatur $T_g$ von 520 °C und kleiner, einem Wert für die hydrolytische Beständigkeit nach DIN 12 111 von weniger als 1500 $\mu$g $Na_2O$/g und einer Zusammensetzung, abgesehen von geringfügigen Verunreinigungen, ausgedrückt in Gew.-% auf Oxid-

6

basis von:

| SiO$_2$ | 19 - 25 | Li$_2$O | 1 - 7 | MgO | 0 - 2 |
|---|---|---|---|---|---|
| B$_2$O$_3$ | 20 - 29 | Na$_2$O | 0 - 4 | CaO | 5 - 10 |
| Al$_2$O$_3$ | 17 - 22 | K$_2$O | 0 - 10 | BaO + SrO | 15 - 21 |
| Σ Alkalioxid | | | 6 - 14 | ZnO | 0 - 5 |
| | | | | Σ Erdalkalioxid + ZnO | 20 - 30 |

2. Einschmelzglas nach Anspruch 1,
**dadurch gekennzeichnet,**
daß bis zu 5 Gew.-% (absolut) des Al$_2$O$_3$-Gehaltes durch La$_2$O$_3$ ersetzt sind.

**Claims**

1. Sealing glass for the production of glass-metal seals, in particular for terminal leadthroughs in galvanic cells having a lithium electrode, having a coefficient of thermal expansion $\alpha20/300$ of 8 - 9.5 . 10$^{-6}$ . K$^{-1}$, a transformation temperature T$_g$ equal to or less than 520°C, a value below 1500 $\mu$g Na$_2$O/g in respect of resistance to hydrolysis to DIN 12 111 and a composition, expressed as wt-% based on oxide, which, disregarding trace impurities, is:

| SiO$_2$ | 19 - 25 | Li$_2$O | 1 - 7 | MgO | 0 - 2 |
|---|---|---|---|---|---|
| B$_2$O$_3$ | 20 - 29 | Na$_2$O | 0 - 4 | CaO | 5 - 10 |
| Al$_2$O$_3$ | 17 - 22 | K$_2$O | 0 - 10 | ΣBaO + SrO | 15 - 21 |
| Σ alkali metal oxide | | | 6 - 14 | ZnO | 0 - 5 |
| | | | | Σ alkaline earth metal oxide + ZnO | 20 - 30 |

2. Sealing glass according to claim 1, characterised in that up to 5 wt-% (absolute) of the Al$_2$O$_3$ content is replaced by La$_2$O$_3$.

**Revendications**

1. Verte de scellement pour la réalisation de liaisons étanches verte-métal, en particulier pour des passages de conducteurs dans des piles galvaniques à électrode de lithium, présentant un coefficient de dilatation thermique $\alpha_{20/300}$ valant de 8.10$^{-6}$ à 9,5.10$^{-6}$ K$^{-1}$, une température de transition vitreuse T$_g$ inférieure ou égale à 520°C, et une valeur de la stabilité vis-à-vis de l'hydrolyse, déterminée selon la norme DIN 12 111, inférieure à 1500 $\mu$gNa$_2$O/g, et dont la composition, exprimée en pourcentages pondéraux d'oxydes en ne tenant pas compte des impuretés négligeables, est la suivante :

| | |
|---|---|
| SiO$_2$ | 19 - 25 |
| B$_2$O$_3$ | 20 - 29 |
| Al$_2$O$_3$ | 17 - 22 |
| Li$_2$O | 1 - 7 |
| Na$_2$O | 0 - 4 |
| K$_2$O | 0 - 10 |
| total des oxydes alcalins | 6 - 14 |
| MgO | 0 - 2 |
| CaO | 5 - 10 |
| total BaO + SrO | 15 - 21 |
| ZnO | 0 - 5 |
| total des oxydes alcalino-terreux et de ZnO | 20 - 30 |

2. Verre de scellement conforme à la revendication 1, caractérisé en ce que jusqu'à 5 % en poids (en valeur absolue) de la teneur en $Al_2O_3$ sont remplacés par du $La_2O_3$.